# EUROPÄISCHE PATENTSCHRIFT

(11) **EP 3 524 565 B1**
(45) Veröffentlichungstag und Bekanntmachung des Hinweises auf die Patenterteilung: **24.05.2023**
(21) Anmeldenummer: 19151356.3
(22) Anmeldetag: 11.01.2019
(51) Int. Cl.: B66F 9/075

(54) **BATTERIEVERRIEGELUNG**
BATTERY LOCK
DISPOSITIF DE VERROUILLAGE DE LA BATTERIE

(30) Priorität: 07.02.2018 DE 102018201892
(43) Veröffentlichungstag der Anmeldung: 14.08.2019
(73) Patentinhaber: Jungheinrich Aktiengesellschaft, 22047 Hamburg (DE)
(72) Erfinder: Schöttke, Carsten, 85368 Moosburg (DE); Bibernell, Hubert, 84034 Landshut (DE)
(74) Vertreter: Weickmann & Weickmann PartmbB

(56) Entgegenhaltungen:
- EP-A1- 3 272 700
- DE-A1- 10 159 555
- JP-A- H0 467 562
- JP-U- S59 105 298

## Beschreibung

Die vorliegende Erfindung betrifft ein elektrisch betriebenes Flurförderzeug, insbesondere einen Schmalgang-Gabelstapler, umfassend ein Batteriefach zur Aufnahme eines Batterieblocks, welches an wenigstens einer Seite zur Entnahme des Batterieblocks in Breitenrichtung des Fahrzeugs offen ist und an seiner Oberseite eine im Wesentlichen in Längsrichtung des Fahrzeugs verlaufende Strebe aufweist, sowie wenigstens eine Verriegelungsvorrichtung für einen in dem Batteriefach aufgenommenen Batterieblock.

Elektrisch betriebene Flurförderzeuge, die mit einem Batterieblock zur Versorgung wenigstens eines elektrisch betriebenen Traktionsmotors ausgestattet sind, werden u.a. in Umgebungen eingesetzt, in denen beispielsweise aufgrund von Abgasbestimmungen lokale Emissionen ausgeschlossen werden müssen und daher Fahrzeuge mit Verbrennungsmotoren nicht infrage kommen. Hierbei kann es sich beispielsweise um überdachte Logistikeinrichtungen wie Regallager handeln, in denen die Regale zur besseren Ausnutzung des zur Verfügung stehenden Bauraums möglichst nah zueinander positioniert sind, so dass zwischen ihnen lediglich sogenannte Schmalgänge verbleiben. Die Ausmaße dieser Schmalgänge stellen somit auch an die in derartigen Anlagen bewegten Flurförderzeuge Bedingungen hinsichtlich ihrer Konstruktion und insbesondere ihrer Abmessungen in Breitenrichtung bezüglich ihrer Hauptbewegungsrichtung.

Jedoch tritt bei elektrisch betriebenen Fahrzeugen im Gegensatz zu Fahrzeugen mit Verbrennungsmotor, die innerhalb weniger Minuten aufgetankt werden können, stets das Problem auf, dass ein vollständiges Aufladen des Batterieblocks in der Regel mehrere Stunden benötigt, währenddessen das Fahrzeug dementsprechend nicht einsatzbereit ist. Im Fall der oben beschriebenen Flurförderzeuge für Logistikanlagen, in denen häufig im Schichtbetrieb gearbeitet wird, sind derartige Standzeiten allerdings nicht akzeptabel.

Zur Lösung dieses Problems besteht eine bekannte Alternative hierbei darin, den Batterieblock nicht fest in dem Flurförderzeug zu verbauen, sondern ihn entnehmbar bzw. austauschbar in dem Flurförderzeug anzuordnen. Durch diese Maßnahme ist es nicht mehr erforderlich, das gesamte Fahrzeug für mehrere Stunden während eines Ladezyklus des Batterieblocks stillzulegen, sondern dieser kann extern von dem Flurförderzeug aufgeladen werden und dann einen entladenen Batterieblock in dem Flurförderzeug ersetzen.

Ein derartiger Wechsel eines entladenen durch einen extern geladenen Batterieblock wird in der Regel mittels einer Hubvorrichtung, wie beispielsweise einem Niederhubfahrzeug, durchgeführt, mit der der in dem Flurförderzeug eingesetzte Batterieblock entnommen werden kann. Um die Wechselvorgänge von Batterieblöcken in derartigen Flurförderzeugen zu ermöglichen und die Batterieblöcke andererseits während eines Fahrbetriebs des Flurförderzeugs sicher in dem Fahrzeug zu halten, sind verschiedene Vorrichtungen im Einsatz, die eine lösbare Verriegelung des Batterieblocks in seinem Batteriefach in dem Flurförderzeug ermöglichen.

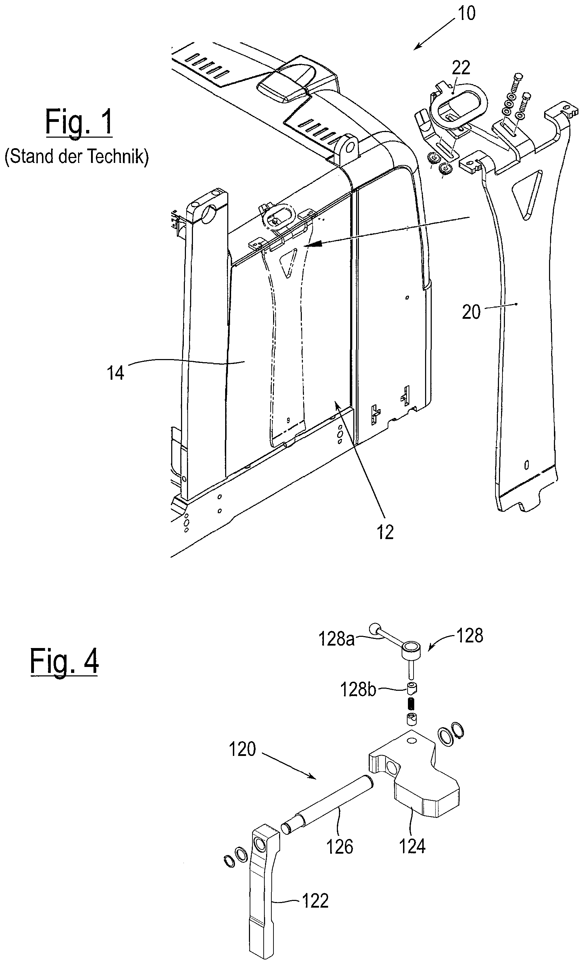

Ein Beispiel für eine derartige Verriegelungsvorrichtung aus dem Stand der Technik ist in Figur 1 dargestellt, die einen Abschnitt eines bekannten Flurförderzeugs 10 zeigt, der ein Batteriefach 12 umfasst, das zwischen den beiden Achsen des Flurförderzeugs 10 angeordnet und seitlich zugänglich ist. In der in Figur 1 gezeigten Darstellung ist in diesem Batteriefach 12 ein Batterieblock 14 aufgenommen, und das Batteriefach 12 ist an vier Seiten vom Rahmen des Flurförderzeugs 10 umgeben.

Lediglich in Breitenrichtung des Flurförderzeugs 10 ist das Batteriefach 12 nach außen offen, so dass in dem in Figur 1 dargestellten Flurförderzeug die Entnahme des Batterieblocks 14 in Breitenrichtung des Flurförderzeugs 10 erfolgen wird. Des Weiteren ist in Figur 1 eine Verriegelungsvorrichtung 20 dargestellt, die mittels einer manuell bedienbaren Hebelvorrichtung 22 an einem unteren und einem oberen Rahmenteil des Flurförderzeugs 10 im Bereich der Öffnung des Batteriefachs 12 absteckbar bzw. verriegelbar ist. Die Verriegelungsvorrichtung 20 überspannt somit die Öffnung des Batteriefachs 12 und hält den Batterieblock 14 im Fahrbetrieb des Flurförderzeugs 10 an seiner vorgesehenen Position.

Die Darstellung aus der Figur 1 zeigt jedoch auch bereits die Nachteile der Verriegelungsvorrichtung 20 aus dem Stand der Technik. Einerseits ist durch das notwendige Abstecken der Vorrichtung 20 am Fahrzeugrahmen das Lösen der Vorrichtung 20 zur Entnahme des Batterieblocks 14 sowie insbesondere das Anbringen der Verriegelungsvorrichtung 20 am Flurförderzeug 10 mühsam und zeitaufwendig. Ferner nimmt die Verriegelungsvorrichtung 20 in Breitenrichtung des Fahrzeugs 10 einen nicht unerheblichen Bauraum ein, der zulasten der möglichen maximalen Baubreite des Batterieblocks 14 geht. Da allerdings stets eine maximale Kapazität des Batterieblocks 14 erwünscht ist und diese nahezu linear mit dessen Volumen korreliert ist, geht durch die Baubreite der Verriegelungsvorrichtung 20 letztlich auch mögliche Kapazität des Batterieblocks 14 verloren, insbesondere wenn, wie im oben genannten Fall eines Schmalgang-Flurförderzeugs, die Gesamt-Baubreite des Fahrzeugs 10 durch äußere Bedingungen begrenzt ist. Zuletzt benötigt die bekannte Verriegelungsvorrichtung 20 auch vergleichsweise viele Bauteile und ist daher teuer in ihrer Herstellung oder Anschaffung.

Weiterhin ist aus der EP 3 272 700 A1 ein elektrisch betriebenes Fluförderzeug bekannt, welches in gattungsgemäßer Weise eine Verriegelungsvorrichtung mit einem zwischen einer Verriegelungsposition und einer Freigabeposition schwenkbar getragenen Schwenkhebel umfasst.

Es ist daher die Aufgabe der vorliegenden Erfindung, ein gattungsgemäßes Flurförderzeug mit einer Verriegelungsvorrichtung für den in einem Batteriefach aufgenommenen Batterieblock zu schaffen, die ergonomisch günstig für einen Bediener zu lösen und zu verriegeln ist, kostengünstig herzustellen und zu installieren ist, eine möglichst geringe Baubreite aufweist und dennoch den Batterieblock zuverlässig an seinem vorbestimmten Platz hält.

Um die genannte Aufgabe zu lösen, umfasst die wenigstens eine Verriegelungsvorrichtung des erfindungsgemäßen Flurförderzeugs eine der Strebe zugeordnete Halterung, eine oberhalb des Batteriefachs in Breitenrichtung des Flurförderzeugs verlaufende, durch die Halterung schwenkbar gehalterte Schwenkwelle, und einen von der Schwenkwelle getragenen Schwenkhebel, welcher zwischen einer Verriegelungsposition und einer Freigabeposition schwenkbar ist, wobei der Schwenkhebel dazu eingerichtet ist, in seiner Verriegelungsposition den Batterieblock abzustützen und in seiner Freigabeposition den Batterieblock für eine Entnahme aus dem Flurförderzeug freizugeben. Hierbei ist die axiale Richtung der Schwenkwelle dementsprechend im Wesentlichen gleich der Entnahmerichtung des Batterieblocks.

Durch die erfindungsgemäße Bauweise einer Verriegelungsvorrichtung kann diese von einem Bediener in einfacher Weise an dem Flurförderzeug erreicht und bedient werden, sie weist eine minimale Anzahl von Teilen auf, wodurch sie einfach herzustellen und kostengünstig ist, und weiterhin kann durch ihre kompakte Bauweise eine möglichst breite Auslegung des Batterieblocks und damit eine hohe Kapazität desselben erreicht werden.

Wenngleich es prinzipiell möglich ist, die Verriegelungsvorrichtung derart auszubilden, dass der Schwenkhebel lediglich durch die Wirkung der Schwerkraft in seinen vorbestimmten Positionen gehalten werden kann, zur Sicherstellung der Betriebssicherheit der Verriegelungsvorrichtung des erfindungsgemäßen Flurförderzeugs umfasst diese ferner eine erste Klemmvorrichtung, welche dazu eingerichtet ist, in der Lage zu sein, die Schwenkwelle in wenigstens einer Schwenkposition festzusetzen. Bei dieser Schwenkposition kann es sich beispielsweise entweder um die Verriegelungsposition oder die Freigabeposition handeln.

In einer Weiterbildung kann die erste Klemmvorrichtung jedoch auch dazu eingerichtet sein, in der Lage zu sein, die Schwenkwelle in beliebigen Schwenkpositionen festzusetzen. In jedem Fall kann die Klemmvorrichtung durch Kraft- oder Reibschluss zwischen der Schwenkwelle und einem Klemmelement wirken, das wiederum von dem Bediener zwischen einem Freigabe- und einem Klemmzustand überführt werden kann.

In einer Weiterbildung kann der Schwenkhebel ferner axial an der Schwenkwelle verlagerbar getragen sein oder gemeinsam mit der Schwenkwelle durch die Halterung entlang der axialen Richtung der Schwenkwelle verlagerbar getragen sein. Auf diese Weise kann der Schwenkhebel gegenüber dem Batterieblock in Breitenrichtung des Flurförderzeugs verlagerbar sein, so dass jede mögliche Toleranz durch eine Verlagerung des Hebels gegenüber dem Batterieblock ausgeglichen werden kann und somit dem Batterieblock kein Bewegungsspiel in seiner vorgesehenen Arbeitsposition verbleibt. Eine Veränderung des Fahrzeugschwerpunkts während der Fahrt durch ein Verrutschen des Batterieblocks kann somit zuverlässig ausgeschlossen werden.

In diesem Zusammenhang kann ferner eine zweite Klemmvorrichtung vorgesehen sein, welche dazu eingerichtet ist, in der Lage zu sein, den Schwenkhebel in wenigstens einer Position in der axialen Richtung der Schwenkwelle bezüglich der Halterung festzusetzen. Alternativ könnte jedoch beispielsweise auch daran gedacht werden, ein elastisches Element vorzusehen, welches den Schwenkhebel in eine geeignete Richtung vorbelastet, so dass ein Festsetzen nicht unbedingt notwendig ist.

In einer besonders vorteilhaften und einfachen Ausführungsform können die erste Klemmvorrichtung und die zweite Klemmvorrichtung durch eine einzelne gemeinsame Klemmvorrichtung ausgebildet sein, beispielsweise kann in dem Fall, dass der Schwenkhebel fest an der Schwenkwelle angebracht und gemeinsam mit dieser gegenüber der Halterung verlagerbar ist, eine gemeinsame Klemmvorrichtung vorgesehen sein, die die Schwenkwelle sowohl hinsichtlich einer axialen Bewegung gegenüber der Halterung als auch hinsichtlich einer Winkelbewegung festsetzt.

Alternativ oder zusätzlich kann die Halterung ferner dazu eingerichtet sein, den Schwenkbereich des Schwenkhebels in wenigstens eine Schwenkrichtung zu begrenzen. Es kann beispielsweise daran gedacht werden, in der Freigabeposition des Schwenkhebels eine Anlage vorzusehen, die den Schwenkhebel in einem stabilen Zustand hält, jedoch kein Festsetzen erfordert.

Da es üblich und bauartbedingt vorteilhaft ist, wenn die wenigstens eine Öffnung des Batteriefachs bezüglich der Hauptbewegungsrichtung des Flurförderzeugs seitlich angeordnet ist, ist erfindungsgemäß die Entnahmerichtung in Breitenrichtung des Flurförderzeugs orientiert. Insbesondere kann das Batteriefach an zwei gegenüberliegenden Seiten zur Entnahme des Batterieblocks in Breitenrichtung des Fahrzeugs eine Öffnung aufweisen, wobei jeder der beiden Öffnungen wenigstens eine Verriegelungsvorrichtung zugeordnet sein kann. Auf diese Weise wird die Flexibilität des erfindungsgemäßen Flurförderzeugs erhöht, da eine Entnahme des Batterieblocks nach beiden Seiten hin möglich ist und somit unter Umständen vor der Entnahme auf aufwendige Rangieroperationen verzichtet werden kann.

Ferner können in dem erfindungsgemäßen Flurförderzeug an einer Bodenfläche des Batteriefachs Rollen vorgesehen sein, auf welchen der Batterieblock aufsteht, und welche dementsprechend eine Entnahme des Batterieblocks aus dem Batteriefach heraus erleichtern.

Des Weiteren kann das erfindungsgemäße Flurförderzeug ferner ein entnehmbares Blendenelement umfassen, welches die wenigstens eine Öffnung des Batteriefachs in Breitenrichtung des Flurförderzeugs begrenzt, wobei die wenigstens eine Verriegelungsvorrichtung innerhalb des Blendenelements angeordnet sein kann.

Zuletzt kann in der wenigsten einen Verriegelungsvorrichtung der Schwenkhebel auf der Schwenkwelle über einen Gewindeansatz (Bewegungs-, Steilgewinde) derart gelagert sein, damit während des Fahrbetriebs evtl. auftretende Anpassungen des Einspannbereichs in Breitenrichtung des Fahrzeugs durch Schwerkraft-bedingtes Abschwenken des Schwenkhebels ausgeglichen werden können. Der Schwenkhebel muss hierbei bei der Verriegelung durch den Bediener in einem Winkel von max. 80° zur theoretischen Endlage festgestellt werden.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Fig. 1: ein Abschnitt eines elektrisch betriebenen Flurförderzeugs aus dem Stand der Technik;
- Fig. 2a und 2b: ein Abschnitt eines erfindungsgemäßen elektrisch betriebenen Flurförderzeugs in zwei Ansichten;
- Fig. 3a und 3b: Detailansichten der Verriegelungsvorrichtung des Flurförderzeugs aus den Figuren 2a und 2b; und
- Fig. 4: eine Explosionsdarstellung der Verriegelungsvorrichtung aus dem erfindungsgemäßen Flurförderzeug.

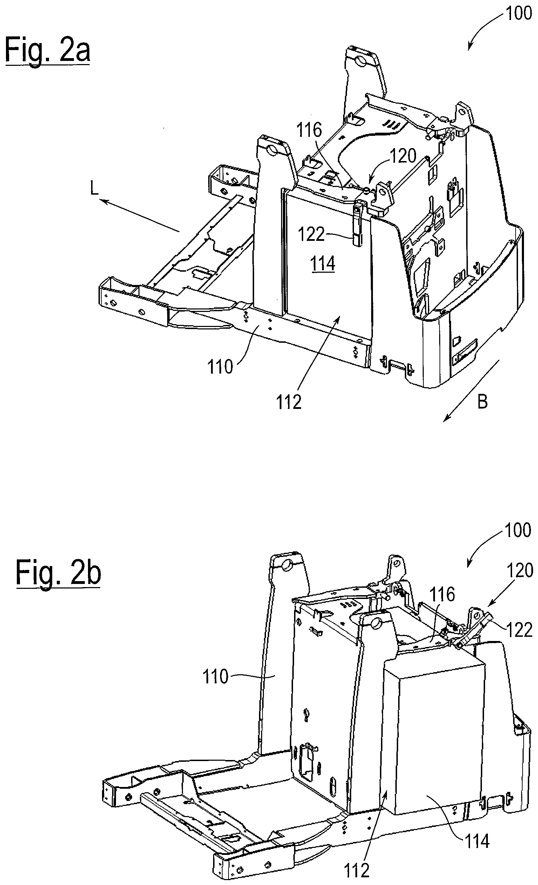

In den Figuren 2a und 2b ist jeweils ein Abschnitt eines erfindungsgemäßen Flurförderzeugs 100 mit einem Fahrzeugrahmen 110 gezeigt, wobei aus Gründen der Übersichtlichkeit lediglich für die vorliegende Erfindung relevante Komponenten des Flurförderzeugs 100 dargestellt sind und beispielsweise auf die Darstellung von Rädern, eines Fahrerstands und eines Hubgerüsts verzichtet worden ist.

Das Flurförderzeug 100 ist als sogenannter Schmalgang-Gabelstapler ausgebildet und dazu vorgesehen, sich zwischen eng beabstandeten Regalreihen in überdachten Logistikeinrichtungen hauptsächlich entlang seiner Vorwärts- oder Längsrichtung L zu bewegen. Hierzu weist das Flurförderzeug 100 in seiner Breitenrichtung B relativ kompakte Abmessungen auf, die auf die Abstände zwischen den Regalreihen abgestimmt sind und die im Fahrbetrieb nicht durch Anbauteile oder Komponenten des Flurförderzeugs 100 überschritten werden dürfen.

Für den Antrieb des Flurförderzeugs 100 sind in den Figuren 2a und 2b nicht gezeigte Traktionsmotoren zuständig, die von dem in dem Batteriefach 112 aufgenommenen Batterieblock 114 mit elektrischer Energie versorgt werden. Hierbei ist das Batteriefach 112 an vier Seiten von dem Fahrzeugrahmen 110 umschlossen, wobei unter anderem an der Oberseite davon eine Strebe 116 vorgesehen ist, die in Längsrichtung L des Flurförderzeugs 110 verläuft.

Durch die Anordnung des Batterieblocks 114 an der gezeigten Position in dem Fahrzeugrahmen 110 des Flurförderzeugs 100 wirkt dieser als Teil des Gegengewichts des Flurförderzeugs 110, das dazu vorgesehen ist, den durch von dem nicht gezeigten Hubgerüst getragene Lasten entstehenden Kippmomenten auf das Flurförderzeug 110 entgegenzuwirken.

Um eine möglichst hohe Kapazität des Batterieblocks 114 für einen möglichst langen Betrieb des Flurförderzeugs 100 ohne vollständige Entladung davon zu ermöglichen, ist der Batterieblock 114 mit Abmessungen ausgebildet, die in Breitenrichtung B des Flurförderzeugs 100 im Wesentlichen dessen Außenabmessungen entsprechen. Lediglich eine in den Figuren 2a und 2b nicht gezeigte lösbar an dem Fahrzeugrahmen 110 angebrachte Blende kann noch vorgesehen sein, um das Batteriefach 112 im Betrieb des Flurförderzeugs 100 in Breitenrichtung B abzudecken und die Außenkontur des Flurförderzeugs 100 abzuschließen.

Um die Standzeiten des Flurförderzeugs 100 bei entladenem Batterieblock 114 zu verringern, ist dieser aus dem Batteriefach 112 entnehmbar angeordnet, um bei Bedarf gegen einen extern geladenen weiteren Batterieblock ersetzt werden zu können. Hierzu sind am Boden des Batteriefachs 112 Rollen vorgesehen, auf denen der Batterieblock 114 aufstehen kann, und die ein Abrollen des Batterieblocks 114 in Breitenrichtung B des Flurförderzeugs 100 zu dessen Entnahme bzw. Einführen erlauben.

Damit im Fahrbetrieb des Flurförderzeugs 100 der Batterieblock 114 an seiner vorgesehenen Position in dem Batteriefach 112 gehalten wird und nicht, beispielsweise durch die Fliehkraft beim Durchfahren einer Kurve, unerwünscht auf den Rollen am Boden des Batteriefachs 112 abrollt, ist ferner an der Strebe 116 oberhalb des Batteriefachs 112 eine Verriegelungsvorrichtung 120 dargestellt, die ein Verriegeln des Batterieblocks 114 für den Fahrbetrieb des Flurförderzeugs 100 ebenso wie ein Freigeben des Batterieblocks 114 für dessen Entnahme ermöglicht. Hierbei ist von der Verriegelungsvorrichtung 120 in den Figuren 2a und 2b jeweils lediglich der Schwenkhebel 122 zu erkennen, der sich in Figur 2a in seiner Verrieglungsposition befindet und in dieser den Batterieblock 114 in Breitenrichtung B des Flurförderzeugs 100 nach außen abstützt, sowie sich in Figur 2b in seiner Freigabeposition befindet, in der er aus dem Bereich des Batterieblocks 114 herausgeschwenkt ist und daher eine Entnahme des Batterieblocks 114 in Breitenrichtung B aus dem Batteriefach 112 heraus erlaubt.

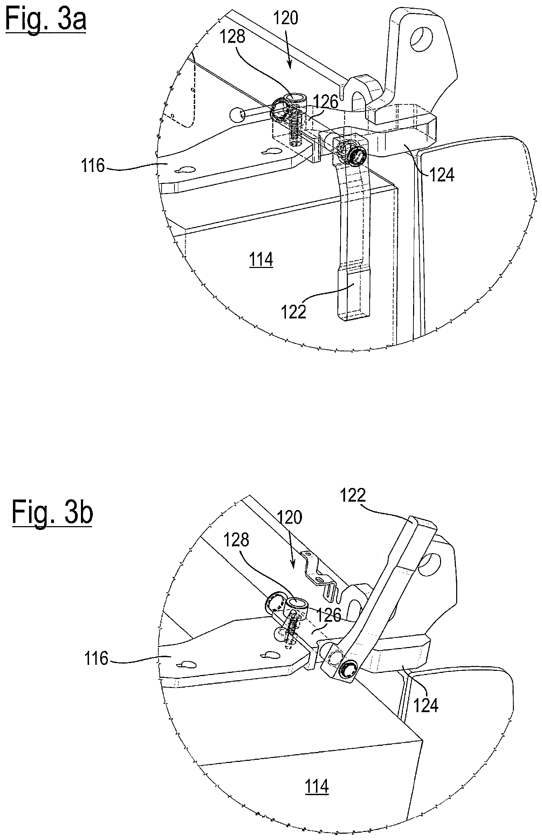

Zum besseren Verständnis ist die Verriegelungsvorrichtung 120 in den Figuren 3a, 3b und 4 erneut in vergrößerter Darstellung gezeigt, wobei die Figur 3a erneut die Verriegelungsposition des Schwenkhebels 122 an dem Flurförderzeug 100 zeigt, die Figur 3b dessen Freigabeposition zeigt und die Verriegelungsvorrichtung 120 in Figur 4 in einer Explosionsdarstellung gezeigt ist.

Die Verriegelungsvorrichtung 120 umfasst neben dem bereits angesprochenen Schwenkhebel 122, der den Batterieblock in seiner Verriegelungsposition abstützt, noch eine Halterung 124, eine Schwenkwelle 126, an der der Schwenkhebel 122 dreh- und ortsfest anbringbar ist, und eine Klemmvorrichtung 128.

Wie in den Figuren 3a und 3b am besten zu erkennen ist, ist die Halterung 124 der Strebe 116 zugeordnet und trägt die Schwenkwelle 126 derart, dass ihre axiale Richtung in Breitenrichtung B des Flurförderzeugs 110 oberhalb des Batteriefachs 112 verläuft. Die Schwenkwelle 126 ist ferner in ihrer axialen Richtung gegenüber der Halterung 124 gemeinsam mit dem Schwenkhebel 122 um einen gewissen Betrag verlagerbar, so dass für eine Überführung des Schwenkhebels von der Verriegelungsposition aus Figur 3a in die Freigabeposition aus Figur 3b zunächst ein manuelles Herausziehen des Schwenkhebels 122 in Breitenrichtung B des Flurförderzeugs 100 und dann ein Schwenken des Schwenkhebels 122 um gut 180° mit dem Uhrzeigersinn durchgeführt werden muss, um den Schwenkhebel aus dem Bereich des Batterieblocks 114 heraus zu schwenken und diesen für eine Entnahme freizugeben. Umgekehrt muss für ein Verriegeln des Batterieblocks 114 in dem Batteriefach 112 zunächst der Schwenkhebel 122 nach unten geschwenkt und dann zur Anlage an dem Batterieblock 114 in Breitenrichtung B nach innen geschoben werden, um den Batterieblock 114 spielfrei an seiner Betriebsposition festzusetzen.

Zuletzt umfasst die Verriegelungsvorrichtung 120 noch die Klemmvorrichtung 128, mittels derer die Schwenkwelle 126 und damit der Schwenkhebel 122 in beliebigen axialen und Winkelpositionen festgesetzt werden kann. Hierzu kann der Bediener das Hebelelement 128a der Klemmvorrichtung greifen und drehen, um das Klemmbacken-Element 128b zum Verklemmen der Schwenkwelle 126 in ihrer momentanen Position mit dieser in Eingriff zu bringen bzw. zum Freigeben der Schwenkwelle 126 aus dem Eingriff mit ihr zu bringen. Die Klemmvorrichtung 128 entspricht somit einer erfindungsgemäßen einzelnen Klemmvorrichtung, die sowohl die Aufgabe der ersten als auch der zweiten Klemmvorrichtung eines Festsetzens des Schwenkhebels 122 hinsichtlich seiner Winkelposition bzw. axialen Position übernimmt.

Wenngleich in der gezeigten Ausführungsform eine manuelle Betätigung der Verriegelungsvorrichtung 120 vorgesehen ist, die durch die ergonomisch günstige Positionierung der Vorrichtung 120 für den Bediener komfortabel durchzuführen ist, könnte andererseits auch eine automatische oder halbautomatische Betätigung vorgesehen werden, bei der das Schwenken des Schwenkhebels und/oder das Festsetzen bzw. Freigeben der Schwenkwelle durch gesteuerte Aktuatoren durchgeführt wird.

## Patentansprüche

1. Elektrisch betriebenes Flurförderzeug, insbesondere Schmalgang-Gabelstapler, umfassend:
- ein Batteriefach (112) zur Aufnahme eines Batterieblocks (114), welches an wenigstens einer Seite zur Entnahme des Batterieblocks (114) in Breitenrichtung (B) des Fahrzeugs offen ist und an seiner Oberseite eine im Wesentlichen in Längsrichtung (L) des Fahrzeugs verlaufende Strebe (116) aufweist, und
- wenigstens eine Verriegelungsvorrichtung (120) für den in einem Batteriefach (112) aufgenommenen Batterieblock (114);
wobei die wenigstens eine Verriegelungsvorrichtung (120) umfasst:
- eine der Strebe (116) zugordnete Halterung (124);
- eine oberhalb des Batteriefachs (112) in Breitenrichtung (B) des Flurförderzeugs verlaufende, durch die Halterung (124) schwenkbar gehalterte Schwenkwelle (126); und
- einen von der Schwenkwelle (126) getragenen Schwenkhebel (122), welcher zwischen einer Verriegelungsposition und einer Freigabeposition schwenkbar ist;
wobei der Schwenkhebel (122) dazu eingerichtet ist, in seiner Verriegelungsposition den Batterieblock (114) in Breitenrichtung (B) des Fahrzeugs abzustützen und in seiner Freigabeposition den Batterieblock (114) in Breitenrichtung (B) des Fahrzeugs freizugeben, **dadurch gekennzeichnet, dass** die wenigstens eine Verriegelungsvorrichtung (120) ferner eine erste Klemmvorrichtung (128) umfasst, welche dazu eingerichtet ist, in der Lage zu sein, die Schwenkwelle (126) in wenigstens einer Schwenkposition festzusetzen.

2. Elektrisch betriebenes Flurförderzeug nach Anspruch 1, **dadurch gekennzeichnet, dass** die erste Klemmvorrichtung (128) dazu eingerichtet ist, in der Lage zu sein, die Schwenkwelle (126) in beliebigen Schwenkpositionen festzusetzen.

3. Elektrisch betriebenes Flurförderzeug nach einem der vorhergehenden Ansprüche, **dadurch gekennzeichnet, dass** der Schwenkhebel (122) ferner axial an der Schwenkwelle (126) verlagerbar getragen ist oder gemeinsam mit der Schwenkwelle (126) durch die Halterung (124) in Breitenrichtung (B) des Fahrzeugs verlagerbar getragen ist.

4. Elektrisch betriebenes Flurförderzeug nach Anspruch 3, **dadurch gekennzeichnet, dass** die wenigstens eine Verriegelungsvorrichtung (120) ferner eine zweite Klemmvorrichtung (128) umfasst, welche dazu eingerichtet ist, in der Lage zu sein, den Schwenkhebel (122) in wenigstens einer Position bezüglich der Breitenrichtung (B) des Fahrzeugs festzusetzen.

5. Elektrisch betriebenes Flurförderzeug nach den Ansprüchen 1 oder 2 und 4, **dadurch gekennzeichnet, dass** in der wenigstens einen Verriegelungsvorrichtung (120) die erste Klemmvorrichtung und die zweite Klemmvorrichtung durch eine einzelne gemeinsame Klemmvorrichtung (128) ausgebildet sind.

6. Elektrisch betriebenes Flurförderzeug nach einem der vorhergehenden Ansprüche, **dadurch gekennzeichnet, dass** die Halterung (124) ferner dazu eingerichtet ist, den Schwenkbereich des Schwenkhebels (122) in wenigstens eine Schwenkrichtung zu begrenzen.

7. Elektrisch betriebenes Flurförderzeug nach einem der vorhergehenden Ansprüche, **dadurch gekennzeichnet, dass** das Batteriefach (112) an beiden Seiten zur Entnahme des Batterieblocks (114) in Breitenrichtung (B) des Fahrzeugs offen ist und an jeder der beiden Öffnungen eine Strebe (116) und wenigstens eine Verrieglungsvorrichtung (120) vorgesehen ist.

8. Elektrisch betriebenes Flurförderzeug nach einem der vorhergehenden Ansprüche, **dadurch gekennzeichnet, dass** an einer Bodenfläche des Batteriefachs (112) ferner Rollen vorgesehen sind, auf welchen der Batterieblock (114) aufsteht.

9. Elektrisch betriebenes Flurförderzeug nach einem der vorhergehenden Ansprüche, ferner umfassend wenigstens ein entnehmbares Blendenelement, welches eine Öffnung des Batteriefachs (112) in Breitenrichtung des Flurförderzeugs begrenzt, wobei die wenigstens eine Verriegelungsvorrichtung (120) innerhalb des Blendenelements angeordnet ist.

10. Elektrisch betriebenes Flurförderzeug nach einem der vorhergehenden Ansprüche, **dadurch gekennzeichnet, dass** in der wenigsten einen Verriegelungsvorrichtung (120) der Schwenkhebel (122) auf der Schwenkwelle (126) über einen Gewindeansatz derart gelagert ist, damit während des Fahrbetriebs evtl. auftretende Anpassungen des Einspannbereichs in Breitenrichtung (B) durch schwerkraft-bedingtes Abschwenken des Schwenkhebels (122) ausgeglichen werden können.

## Claims

1. Electrically powered industrial truck, in particular a narrow aisle forklift truck, comprising:
- a battery box (112) for housing a battery block (114), which box is open on at least one side for removing the battery block (114) in the width direction (B) of the vehicle and comprises on its top face a strut (116) extending substantially in the longitudinal direction (L) of the vehicle, and
- at least one locking device (120) for the battery block (114) housed in a battery box (112);
wherein the at least one locking device (120) comprises:
- a mount (124) associated with the strut (116);
- a pivot shaft (126), which extends above the battery box (112) in the width direction (B) of the industrial truck and is pivotally held by the mount (124); and
- a pivot lever (122), which is carried by the pivot shaft (126) and is pivotable between a locking position and a releasing position;
the pivot lever (122) being designed, when in its locking position, to support the battery block (114) in the width direction (B) of the vehicle and, when in its releasing position, to release the battery block (114) in the width direction (B) of the vehicle,
**characterised in that** the at least one locking device (120) further comprises a first clamping device (128), which is designed to be able to fix the pivot shaft (126) in at least one pivot position.

2. Electrically powered industrial truck according to claim 1, **characterised in that** the first clamping device (128) is designed to be able to fix the pivot shaft (126) in any pivot position.

3. Electrically powered industrial truck according to any of the preceding claims, **characterised in that** the pivot lever (122) is furthermore carried so as to be axially movable on the pivot shaft (126) or is carried so as to be movable together with the pivot shaft (126) in the width direction (B) of the vehicle by means of the mount (124).

4. Electrically powered industrial truck according to claim 3, **characterised in that** the at least one locking device (120) further comprises a second clamping device (128), which is designed to be able to fix the pivot lever (122) in at least one position in relation to the width direction (B) of the vehicle.

5. Electrically powered industrial truck according to either claim 1 or claim 2 and claim 4, **characterised in that** the first clamping device and the second clamping device are formed by a single joint clamping device (128) in the at least one locking device (120).

6. Electrically powered industrial truck according to any of the preceding claims, **characterised in that** the mount (124) is furthermore designed to limit the pivot range of the pivot lever (122) in at least one pivot direction.

7. Electrically powered industrial truck according to any of the preceding claims, **characterised in that** the battery box (112) is open on both sides for removing the battery block (114) in the width direction (B) of the vehicle, and a strut (116) and at least one locking device (120) are provided at each of the two openings.

8. Electrically powered industrial truck according to any of the preceding claims, **characterised in that** rollers on which the battery block (114) rests are furthermore provided on a bottom surface of the battery box (112).

9. Electrically powered industrial truck according to any of the preceding claims, further comprising at least one removable cover element, which defines an opening of the battery box (112) in the width direction of the industrial truck, the at least one locking device (120) being arranged within the cover element.

10. Electrically powered industrial truck according to any of the preceding claims, **characterised in that**, in the at least one locking device (120), the pivot lever (122) is pivotally mounted on the pivot shaft (126) by means of a threaded attachment so that, in travel mode, any adjustments to the clamping region in the width direction (B) can be compensated for by the pivot lever (122) pivoting downwards under the effect of gravity.

## Revendications

1. Chariot de manutention électrique, en particulier chariot élévateur à fourche pour allées étroites, comprenant :
- un compartiment de batterie (112) pour loger un bloc de batterie (114), qui est ouvert sur au moins un côté pour le retrait du bloc de batterie (114) dans le sens de la largeur (B) du véhicule et qui présente sur sa face supérieure une entretoise (116) s'étendant essentiellement dans le sens longitudinal (L) du véhicule, et
- au moins un dispositif de verrouillage (120) pour le bloc de batterie (114) logé dans un compartiment de batterie (112) ;
dans lequel ledit au moins un dispositif de verrouillage (120) comprend :
- un support (124) associé à l'entretoise (116) ;
- un arbre de pivotement (126) s'étendant au-dessus du compartiment de batterie (112) dans le sens de la largeur (B) du chariot de manutention et supporté de manière pivotante par le support (124) ; et
- un levier de pivotement (122) porté par l'arbre de pivotement (126) et pouvant pivoter entre une position de verrouillage et une position de libération ;
dans lequel le levier de pivotement (122) est adapté pour, dans sa position de verrouillage, supporter le bloc de batterie (114) dans le sens de la largeur (B) du véhicule et pour, dans sa position de libération, libérer le bloc de batterie (114) dans le sens de la largeur (B) du véhicule,
**caractérisé en ce que** ledit au moins un dispositif de verrouillage (120) comprend en outre un premier dispositif de serrage (128) adapté pour être capable de bloquer l'arbre de pivotement (126) dans au moins une position pivotée.

2. Chariot de manutention électrique selon la revendication 1, **caractérisé en ce que** le premier dispositif de serrage (128) est adapté pour être capable de bloquer l'arbre de pivotement (126) dans n'importe quelle position de pivotement.

3. Chariot de manutention électrique selon l'une des revendications précédentes, **caractérisé en ce que** le levier de pivotement (122) est en outre supporté de manière déplaçable axialement sur l'arbre de pivotement (126) ou est supporté de manière déplaçable conjointement avec l'arbre de pivotement (126) par le support (124) dans le sens de la largeur (B) du véhicule.

4. Chariot de manutention électrique selon la revendication 3, **caractérisé en ce que** ledit au moins un dispositif de verrouillage (120) comprend en outre un deuxième dispositif de serrage (128) adapté pour être capable de bloquer le levier de pivotement (122) dans au moins une position par rapport à la direction de la largeur (B) du véhicule.

5. Chariot de manutention électrique selon les revendications 1 ou 2 et 4, **caractérisé en ce que** dans ledit au moins un dispositif de verrouillage (120), le premier dispositif de serrage et le deuxième dispositif de serrage sont formés par un seul dispositif de serrage commun (128).

6. Chariot de manutention électrique selon l'une des revendications précédentes, **caractérisé en ce que** le support (124) est en outre agencé pour limiter la plage de pivotement du levier de pivotement (122) dans au moins une direction de pivotement.

7. Chariot de manutention selon l'une des revendications précédentes, **caractérisé en ce que** le compartiment de batterie (112) est ouvert de part et d'autre pour l'extraction du bloc de batterie (114) dans le sens de la largeur (B) du chariot, et **en ce qu'**il est prévu une entretoise (116) et au moins un dispositif de verrouillage (120) sur chacune des deux ouvertures.

8. Chariot de manutention électrique selon l'une des revendications précédentes, **caractérisé en ce qu'**il est en outre prévu, sur une surface de fond du compartiment de batterie (112), des roulettes sur lesquelles repose le bloc de batterie (114).

9. Chariot de manutention électrique selon l'une des revendications précédentes, comprenant en outre au moins un élément d'écran amovible délimitant une ouverture du compartiment de batterie (112) dans le sens de la largeur du chariot de manutention, dans lequel ledit au moins un dispositif de verrouillage (120) est disposé à l'intérieur dudit élément d'écran.

10. Chariot de manutention électrique selon l'une des revendications précédentes, **caractérisé en ce que**, dans ledit au moins un dispositif de verrouillage (120), le levier de pivotement (122) est monté sur l'arbre de pivotement (126) par l'intermédiaire d'une pièce de connexion filetée de telle sorte que, pendant le fonctionnement du chariot, des adaptations éventuelles de la zone de serrage dans le sens de la largeur (B) peuvent être compensées par un pivotement du levier de pivotement (122) dû à la force de gravité.
